Europäisches Patentamt

(19) European Patent Office

Office européen des brevets

(11) Publication number: **0 153 487**

**A1**

# (12) EUROPEAN PATENT APPLICATION

(21) Application number: **84116104.5**

(22) Date of filing: **21.12.84**

(51) Int. Cl.⁴: **F 16 B 37/14**

---

(30) Priority: **27.01.84 GB 8402197**

(43) Date of publication of application:
**04.09.85 Bulletin 85/36**

(84) Designated Contracting States:
**DE FR GB IT NL**

(71) Applicant: **Hi-Ton International Limited**
**Grange Road Selly Oak**
**GB-Birmingham B29 6AP, West Midlands(GB)**

(72) Inventor: **Hirst, John Andrew Brian**
**11 Thirlestone Close**
**Kenilworth Warwickshire(GB)**

(74) Representative: **Lewis, Samuel Hewitt et al,**
**FORRESTER & BOEHMERT Widenmayerstrasse 4/I**
**D-8000 München 22(DE)**

---

(54) **Cover.**

(57) A cover (18) is provided for a stud having a male screw-thread the cover being mounted on a member (11) defining an aperture through which the stud extends.

FIG 2

EP 0 153 487 A1

Title: "Cover"

Description of Invention

According to the present invention, there is provided a combination comprising a first member having a male screw thread defining a rectilinear axis, a second member carried on the first member and defining an aperture through which the first member extends and a cover which covers at least a part of one of said members, characterised in that the cover is mounted on the second member.

The cover is preferably formed of a material having a stiffness similar to that of the material of which the second member is formed. Usually, the first and second members will be formed of a metal, in which case the cover also is preferably formed of, or formed mainly of, metal. The first and second members may be formed of steel, in which case the cover also is preferably formed of steel.

The second member preferably has a shoulder facing in a direction generally along the axis and which restrains movement of the cover from the second member, the cover extending from the shoulder in an opposite direction along the axis.

Preferred embodiments of the invention further comprise a sealing element formed of a material having a stiffness less than that of the material of which the second member is formed and interposed between respective parts of the cover and the second member. The sealing member may be formed of a polymeric material, for example a thermoplastic or an elastomer. Alternatively, the sealing member may be formed of a metal which is softer than a metal of which the second member is formed. The sealing element is conveniently seated in a groove adjacent to the shoulder on the second member.

The second member is preferably of annular form, in which case the cover preferably has a circular cross-section in a plane which intersects the second member and is perpendicular to the axis.

There may be on the first member a nut which is adjacent to the second member.

0153487

In a case where a combination according to the invention includes a nut on the first member adjacent to the second member, the cover may cover the entire peripheral surface of the nut. The cover may also cover an end portion of the first member which protrudes from the nut at the side thereof remote from the second member.

The cover is preferably a snap fit on the second member.

The cover may have an internal lip which engages the shoulder on the second member to restrain movement of the cover from the second member and the form of one or both of the lip and shoulder may vary around the axis.

The cover may have a shoulder which restrains movement of the cover relative to the second member, the shoulder facing in a direction along the axis. The shoulder may engage the second member or the sealing element or both.

The lip may present towards the shoulder a surface which is inclined more steeply to the axis at one position than at a further position spaced around the axis from the one position.

Examples of covered nuts and studs embodying the invention will now be described, with reference to the accompanying drawings, wherein:-

FIGURE 1 shows an end elevation of an assembly comprising a stud, nut and cover;

FIGURE 2 shows a cross-section of the assembly on the line II-II of Figure 1;

FIGURE 3 shows a fragmentary section of certain parts of the assembly on the line III-III of Figure 1;

FIGURE 4 is a view similar to Figure 3 of a first further embodiment; and

FIGURE 5 is a similar view to Figure 3 of a second further embodiment.

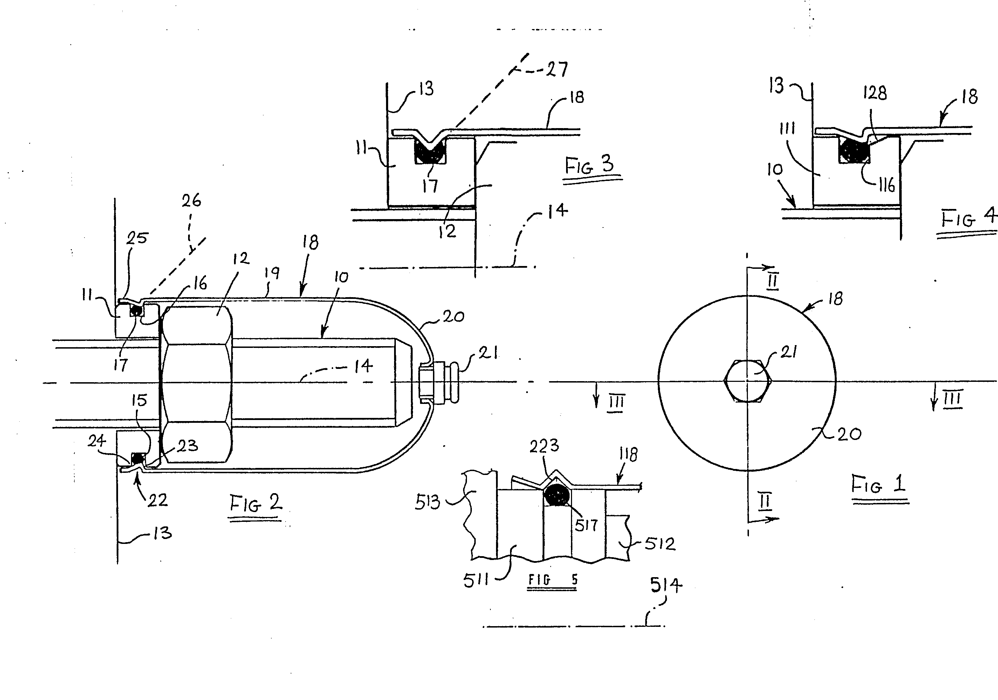

The assembly illustrated in Figures 1, 2 and 3 comprises a first member in the form of a stud 10 which is rectilinear and has a male screw thread extending along at least the entire part of its length which is shown in the drawing. On the stud, there is carried a second member, 11, which is annular, and a nut 12. The stud protrudes from a component 13 of a structure, the components of which are to be held in assembled relation with one another by the stud, annulus 11 and nut 12. The detail of this structure forms no part of the present invention and will not be described. The stud 10 and nut 12 can be used in any situation where a stud and nut fastening is appropriate and the stud and nut may be of known form.

- 3 -

0153487

The annulus 11, nut 12 and component 13 define respective apertures through which the stud 10 extends. These apertures are circular and are centred substantially on the longitudinal axis 14 of the stud. The annulus 11 is trapped between the nut 12 and the component 13.

There is formed in the annulus 11 a circumferential groove 15. One axial boundary of this groove is defined by a shoulder 16 on the annulus which faces away from the nut 10 and preferably lies in a plane perpendicular to the axis 14. A sealing element in the form of an 0-ring 17 is seated in the groove 15.

The assembly further includes a cover 18 which comprises a generally cylindrical peripheral wall 19 and an end wall 20 having a shape which approximates to a part of a sphere. The end wall 20 of the particular example of cover illustrated has at its centre a nipple 21, through which lubricant can be introduced into the space within the cover. In a case where the nipple is not required, it may be substituted by a cap which permanently closes the opening in the end wall 20 of the cover. Alternatively, the end wall may be imperforate, in which case, in manufacture, the cover may be formed as an integral unit. The cover may also be formed by joining, for example by welding, a tubular part and an end cap.

The end wall 20 and nipple 21 collectively cover a free end of the stud 10 and the side wall 19 of the cover extends over a part of the stud 10 which protrudes from the nut 12 in a direction away from the annulus 11 and component 13. The side wall of the cover also extends over the peripheral surfaces of the nut 12 and over at least a part of the periphery of the annulus 11. An end of the cover remote from the end wall 20 is closed by the annulus 11 and 0-ring 17. It will be noted that there is a clearance between the cover 18 and the stud 10. The same cover can approach closely to the component 13 when used to cover protruding stud end portions having different lengths.

Adjacent to its end opposite to the end wall 20, the cover 18 is formed with a radially inwardly projecting lip 22 which presents internally of the cover opposite shoulders 23 and 24. The shoulder 23 faces generally in a direction towards the end wall 20. Around a major part of the circumference of the cover, the shoulder 23 is inclined at a relatively large angle, for example an angle within the range $60^{\circ}$ to $90^{\circ}$, to the axis 14. The shoulder 24 is inclined to the axis 14 at a smaller angle, typically within the range $20^{\circ}$ to $45^{\circ}$.

0153487

The shoulder 23 on the lip 22 overlaps the shoulder 16 on the annulus 11 to restrain withdrawal of the cover from the annulus. The lip 22 extends into the groove 15 to engage the 0-ring 17. In the example illustrated in Figure 2, the shoulder 24 engages the 0-ring.

A free end portion 25 of the cover has a diameter substantially greater than that of the annulus 11, so that the free end portion can easily be positioned around the annulus. If force is then applied to the cover in a direction along the axis 14 towards the component 13, the cover will be stressed and expanded somewhat so that the lip 22 can pass onto the annulus and snap into the groove 15, whereupon the stress in the cover is at least partly relieved.

In a case where the cover 18 is required to be removable from the annulus 11 without being destroyed or seriously damaged, the shoulder 23 may be inclined to the axis 14 at a smaller angle at one position around the axis than at other positions around the axis. The extent of the arc over which the shoulder 23 is less steeply inclined to the axis and the angle at which the shoulder is inclined within this arc are selected according to the required compromise between ease of removal of the cover and avoidance of inadvertent dislodging of the cover. The arc may subtend at the axis 14 an angle of $90^{\circ}$.

The angle of inclination of the shoulder to the axis within this arc may be within the range $25^{\circ}$ to $65^{\circ}$. In Figure 2, the inclination of the shoulder 23 to the axis 14 over the major part of the periphery of the cover is represented by the inclination of the line 26 to the axis. In Figure 3, the inclination of the shoulder 23 over a minor proportion of the circumference of the cover to the axis is represented by the inclination of the line 27 to the axis.

A first further arrangement is illustrated in Figure 4. The assembly of Figure 4 comprises components corresponding to all of those represented in Figures 2 and 3 and each of these components is identical with those of the example shown in Figures 2 and 3, with the exception of the annulus indicated by the reference numeral 111 in Figure 4. This annulus has, over a minor part of its circumference, a chamfer 128 between the shoulder 116 and the peripheral surface of the annulus. This shoulder faces towards the lip of the cover and the chamfer facilitates dislodgement of the cover from the annulus by means of a blow applied to the side wall of the cover near to the end wall.

A second further arrangement is illustrated in Figure 5. Certain parts shown in Figure 5 are identical with parts shown in Figures 1 and 2. In Figure 5, such corresponding parts are identified by like reference numerals with the prefix 5 and the preceding description is deemed to apply, except for differences hereinafter mentioned. The cover 518 need not have a radially inwardly projecting lip, but does have a shoulder 223 which engages the O-ring 517. The shoulder faces in a direction along the axis 514 away from the structure 513.

For the purposes of this description, a surface faces along the axis if a perpendicular to that surface has a component along the axis.

Referring to Figure 2, the stud 10, annulus 11 or 111, nut 12 and cover 18 will generally all be formed of steel. The preferred material for the cover is stainless steel. Other corrosion-resistant metals may be used. However, it is preferred that the material of which the cover is formed has a stiffness similar to that of which the annulus 11 is formed. The annulus is subjected to compression between the nut 12 and component 13 and is required to transmit a substantial axial force between the nut and component 13. There is selected for the annulus 11 a material which is capable of withstanding the intended load without significant permanent deformation. In many cases, plastics, particularly thermoplastics, will be unsuitable materials for the annulus 11. We also prefer to form the cover 18 of materials other than plastics and would normally avoid the use of thermoplastics for the cover.

The 0-ring 24 may be formed of a thermoplastic, for example p.t.f.e. or of an elastomer. We prefer that the 0-ring should be resiliently deformable under the load exerted by the lip 22. Alternatively, there may be substituted for the 0-ring a sealing element formed of somewhat less resilient material. The sealing element may be formed of a metal, in which case the metal selected is preferably one having a lower stiffness than does the metal of which the cover 18 is formed. The sealing element may be formed with an edge adapted to engage the lip 22 substantially in line contact, rather than face-to-face contact.

Whilst we prefer to form the shoulder 16 on an annulus which is formed separately from the nut 12, it would be within the scope of the invention for a shoulder corresponding to the shoulder 16 to be formed on the nut and for the cover to engage this shoulder. There may be used in the assembly a nut having on one end portion flats for co-operation with a spanner and in an opposite end portion a peripheral groove for receiving the lip 22 of the cover and a sealing element.

In a further alternative arrangement, a separately formed annulus is mounted on a nut prior to assembly of the nut with the stud.

Whilst a male element in the form of a solid stud 10 has been illustrated in the drawings, by way of example, other members having a male screw thread may be substituted for the stud shown.

CLAIMS:

1.  A combination comprising a first member (10) having a male screw-thread defining a rectilinear axis (14) and a second member (11) carried on the first member (10) and defining an aperture through which the first member (10) extends, characterised in that the combination also comprises a cover (18) mounted on the second member.

2.  A combination according to Claim 1 wherein the cover is formed of, or formed mainly of a material having stiffness similar to that of the material of which the second member is formed.

3.  A combination according to any one of the preceding claims wherein the second member has a shoulder facing in a direction generally along the axis (14) and which restrains movement of the cover from the second member, the cover extending from the shoulder in an opposite direction along the axis.

4.  A combination according to any one of the preceding claims further comprising a sealing element (17) formed of a material having a stiffness less than that of the material of which the second member (11) is formed and interposed between respective parts of the cover and the second member.

5.  A combination according to Claim 4 wherein the second member (11) comprises a groove (15), the sealing element lying at least partly within the groove.

6.  A combination according to any one of the preceding claims further comprising a nut (12) which is on the first and adjacent to the second member.

7.  A combination according to any one of the preceding claims wherein the cover is a snap-fit on the second member.

8.  A combination according to Claim 3 wherein the cover has an internal lip (22) which engages the shoulder (23) on the second member to restrain movement of the cover from the second member and the form of one or both of the lip and shoulder varies around the axis.

9.    A combination according to any one of the preceding claims wherein the cover comprises a shoulder which restrains movement of the cover relative to the second member, the shoulder facing in a direction along the axis.

10.    A combination according to Claim 4 wherein the cover comprises a shoulder which restrains movement of the cover relative to the second member, the shoulder facing in a direction along the axis and wherein the shoulder engages the sealing element.

11.    Any novel feature or novel combination of features disclosed herein and/or illustrated in the accompanying drawings.

FIG 3

FIG 4

FIG 2

FIG 5

FIG 1

0153487

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 905 411  (DZUS)<br><br>* Whole document * | 1-3,7-9,11 | F 16 B   37/14 |
| A |  | 10 | |
| X | US-A-4 295 766  (SHAW)<br><br>* Whole document * | 1,3,4,6,7,9,11 | |
| A |  | 10 | |
| A | CH-A-  342 799  (EVARD)<br>* Whole document * | 5 | |
| A | GB-A-  523 202  (CHIVERS)<br>* Page  6, lines 36-37, 114-126; figure 5 * | 4,5,10 | TECHNICAL FIELDS SEARCHED (Int. Cl.4)<br><br>F 16 B<br>B 65 D |

The present search report has been drawn up for all claims

| Place of search | Date of completion of the search | Examiner |
|---|---|---|
| THE HAGUE | 24-04-1985 | MARTIN A. |